Europäisches Patentamt

European Patent Office

Office européen des brevets

(11) Veröffentlichungsnummer: **0 469 413 A1**

## EUROPÄISCHE PATENTANMELDUNG

(21) Anmeldenummer: **91112158.0**

(22) Anmeldetag: **20.07.91**

(51) Int. Cl.5: **A61C 11/00**

(30) Priorität: **28.07.90 DE 4023991**
**02.12.90 DE 9016334 U**

(43) Veröffentlichungstag der Anmeldung:
**05.02.92 Patentblatt 92/06**

(84) Benannte Vertragsstaaten:
**AT BE CH DE DK FR GB IT LI LU NL SE**

(71) Anmelder: **Feher, Tibor, Dr.**
**Blumenstrasse 9**
**W-4000 Düsseldorf(DE)**

(72) Erfinder: **Feher, Tibor, Dr.**
**Blumenstrasse 9**
**W-4000 Düsseldorf(DE)**

(74) Vertreter: **Henseler, Daniela**
**Rethelstrasse 123**
**W-4000 Düsseldorf 1(DE)**

(54) **Kopfmodell zur Darstellung gnathologischer Zusammenhänge.**

(57) Die Erfindung betrifft ein Kopfmodell zur Darstellung gnathologischer Zusammenhänge, bestehend aus einem dem menschlichen Kopf nachgebildeten Schädel (1) und Unterkiefer (2) mit einem Ober- (13) und Unterkieferzahnbogen (7), wobei der Unterkiefer über zwei Kiefergelenke (3) mit dem Schädel (1) verbunden und federvorgespannt in einer Bißstellung gehalten ist. Zur Veranschaulichung der Folgen gnathologischer Veränderungen ist vorgesehen, daß die Kiefergelenke (3) jeweils eine am Schädel (1) angeordnete Schädelgelenkbahn (16) in Form einer geschwungenen, konkaven Gleitbahn umfassen, auf der ein in Nuten (20) geführtes, mit einem Gelenkkopf des Unterkiefers in kraftschlüssigen Eingriff bringbares Gleitstück (21) frei beweglich verschiebbar ist und ein außenseitig sichtbares Aufsatzstück (23) trägt.

FIG. 1

Die Erfindung betrifft ein Kopfmodell zur Darstellung gnathologischer Zusammenhänge nach dem Oberbegriff des Anspruchs 1.

Derartige Kopfmodelle dienen dem Zahnarzt als Demonstrationshilfe für eine Betrachtungsweise der Vorgänge im Unterkiefer, dessen Fehlstellung bekanntlich zu muskulären und okklusalen Störungen führt. Die Folge davon sind vielfach Kopfschmerzen, Schlafstörungen, Zerstörung der Zahnsubstanz und/oder ganz allgemein eine Beeinträchtung des Gesamtbefindens der betroffenen Personen.

Der wichtigste Grund einer Fehlpositionierung des Unterkiefers ist eine fehlerhafte Schlußbißstellung, die durch Zahnfehlstellung, fehlerhaft konsuierte Kronen und Füllungen oder nicht mehr einwandfrei sitzenden Zahnersatz verursacht wird. Kleinste Abweichungen des Unterkiefers aus der Zentralstellung im Schlußbiß führen zu einer Verlagerung und damit zu einer Fehlpositionierung der Gelenkköpfe im Kiefergelenk. Die therapeutische Richtigstellung des Unterkiefers ist deshalb ein wichtiges Ziel des Zahnarztes.

Aufgabe der Erfindung ist es daher, ein Kopfmodell zur Darstellung von gnathologischen Zusammenhängen nach dem Oberbegriff des Anspruchs 1 zu schaffen, das die Folgen pathologischer Veränderungen veranschaulicht.

Diese Aufgabe wird gemäß dem kennzeichnenden Teil des Anspruchs 1 gelöst.

Hierdurch wird ein Kopfmodell geschaffen, das auf einfache Weise eine funktionelle Betrachtungsweise der Vorgänge im Unterkiefer erlaubt. Die Zusammenhänge zwischen einer fehlerhaften Schlußbißstellung und den Positionen der Kiefergelenkköpfe können aufgezeigt und deren Folgen demonstriert werden. Das Kiefermodell besteht hierzu aus einer Nachbildung des menschlichen Schädels, in das die typischen Modelle des Ober- und Unterkiefers verschiedener pathologischer Situationen einsetzbar sind. Die funktionellen Bewegungen des menschlichen Kauorgans lassen sich ausführen, wobei auch die Bewegungen innerhalb des Kiefergelenkraumes dargestellt werden. Der Zusammenhang zwischen einer Kiefergelenkerkankung und der Schlußbißstellung wird durch das Kopfmodell veranschaulicht. Die sich in den Gelenkräumen abspielenden Bewegungen können dabei von außen beobachtet werden. Das Kopfmodell ist folglich als Lernmittel und Demonstrationshilfe für gnathologische Betrachtungen besonders geeignet.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1  zeigt schematisch eine Seitenansicht eines ersten Ausführungsbeispiels des Kopfmodells,

Fig. 2  zeigt teilweise und schematisch eine untere Draufsicht eines Schädels des Kopfmodells gemäß Fig. 1 mit Oberkiefer und Schädelgelenkflächen,

Fig. 3  zeigt schematisch eine Seitenansicht einer Betätigungseinrichtung zur Durchführung der funktionellen Bewegungen eines zweiten Ausführungsbeispiels des Kopfmodells,

Fig. 4  zeigt schematisch eine Vorderansicht der Betätigungseinrichtung gemäß Fig. 3.

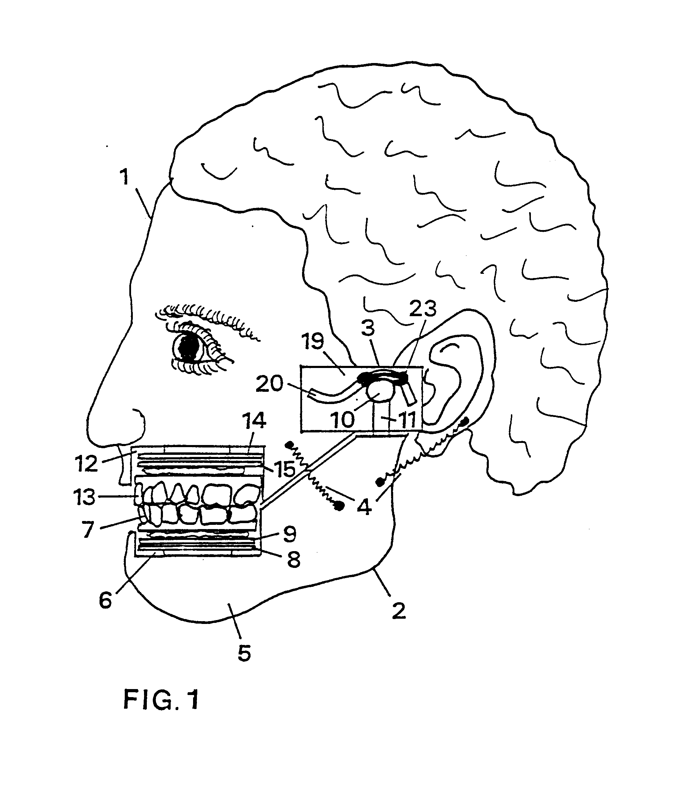

Figur 1 zeigt ein erstes Ausführungsbeispiel eines dreidimensionalen Kopfmodells, bestehend aus einem Schädel 1 und einem Unterkiefer 2, die in ihren äußeren Konturen eine menschliche Nachbildung darstellen. Der Unterkiefer 2 ist über zwei Kiefergelenke 3 mit dem Schädel 1 verbunden und mittels elastischer Befestigungseinrichtungen 4, die den menschlichen Bandapparat und Muskulatur des Unterkiefers simulieren, an dem Schädel 1 befestigt. Diese Befestigungseinrichtungen 4 bilden eine elastische Verbindung zwischen dem Schädel 1 und dem Unterkiefer 2, indem sie beidseitig außenseitig am Unterkiefer 2 angreifen. Die elastische Verbindung ermöglicht unter Einwirkung einer Kraftkomponente die Ausführung der funktionellen Bewegungen des Unterkiefers 2, nämlich Öffnungsbewegung, Vorschubbewegung und seitliche Verschiebung (links oder rechts). Die Befestigungseinrichtungen 4 können dabei gleichzeitig die Bewegung des Unterkiefers 2 begrenzen und sind hierzu vorzugsweise als Federn ausgebildet.

Der Unterkiefer 2 besteht aus einem Unterkieferknochen 5, dessen geometrische Grundlage das Bonwillsche Dreieck ist. Vorderseitig besitzt der Unterkieferknochen 5 eine Ausnehmung 6 für eine auswechselbare Aufnahme eines Zahnbogenmodells 7 des Unterkiefers eines Patienten für eine gewählte normale oder pathologische Situation. Für das auswechselbare Einsetzen des Zahnbogenmodells 7 wird vorzugsweise ein Quicksplit-Magnetofix-System benutzt, dessen Primärsockel 8 in dem Unterkieferknochen 5 verankert ist. Auf den Sekundärsockel 9 ist das Unterkiefermodell 7 eines Patienten für die gewählte pathologische Situation anatomisch richtig eingegipst. Zur Verbindung mit dem Schädel 1 weist der Unterkiefer 2 rückseitig paarig angeordnete Gelenkköpfe 10 auf, die einen Teil des Kiefergelenks 3 bilden und einseitig oder beidseitig verlagerbar sind. Die Oberfläche dieser Gelenkköpfe ist konvex ausgebildet. Vorzugsweise besitzen die Gelenkköpfe 10 kugel- oder walzenartige Form. Die Gelenkköpfe 10 können jeweils auf einem Gelenkhals 11 angeordnet sein, deren Länge individuell veränderbar ist.

Der Schädel 1 ist in seiner Grundform dem menschlichen Kopf nachgebildet. Anstelle eines Oberkiefers ist allerdings eine Ausnehmung 12 vorgesehen, in die ein Zahnbogenmodell 13 des zugehörigen Oberkiefers eines Patienten für die gewählte pathologische Situation einsetzbar ist. Für ein auswechselbares Einsetzen eines Zahnbogenmodells 13 wird vorzugsweise ein Quicksplit-Magnetofix-System benutzt, dessen Primärsockel 14 im Oberkieferbereich des Schädels 1 verankert ist. Auf den Sekundärsockel 15 ist das Oberkiefermodell 13 anatomisch richtig eingegipst. Vorzugsweise ist der Primärsockel 14 parallel zur Horizontalebene des Schädels 1 verankert.

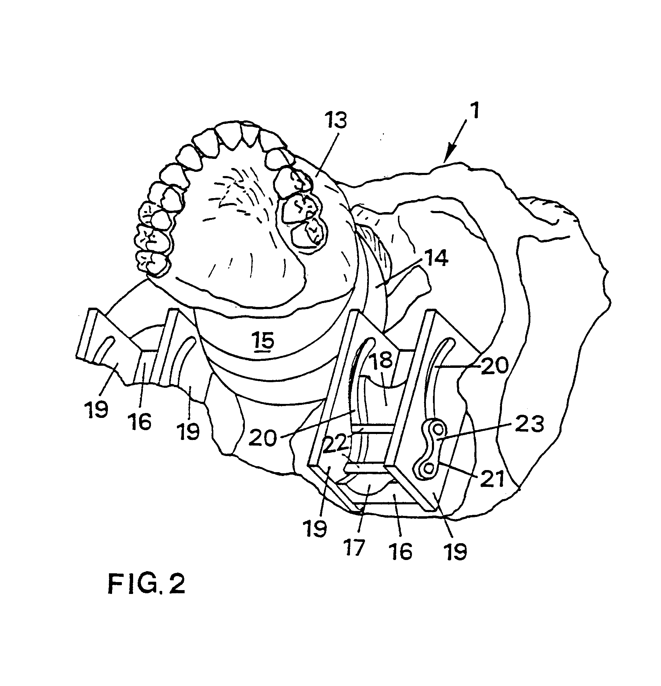

Wie insbesondere aus Figur 2 erkennbar ist, sind an dem Schädel 1 zwei auswechselbare Schädelgelenkbahnen 16 im Bereich des Schläfenbeins angeordnet, die den anderen Teil der Kiefergelenke 3 bilden. Die beiden Gelenkbahnen 16 sind identisch aufgebaut und umfassen eine leicht geschwungene Schädelgelenkfläche mit einem konkaven dorsalen Abschnitt 17 und einem konvexen vorderen Abschnitt 18. Die Oberfläche der Schädelgelenkbahn 16 ist konkav ausgebildet und besitzt vorzugsweise eine an die Krümmung der Oberfläche der Gelenkköpfe 10 angepaßte Krümmung.Diese Schädelgelenkbahnen 16 erlauben eine Ausführung einer Scharnier- und Gleitbewegung der Gelenkköpfe 10 im Kiefergelenk 3.

Entlang ihrer Längserstreckung wird jede Schädelgelenkbahn 16 beidseitig von Seitenstücken 19 begrenzt, die eine entsprechend dem Verlauf der Schädelgelenkbahn 16 geschwungene Führungsnut 20 aufweisen. Die beiden Führungsnuten 20 einer Schädelgelenkbahn 16 sind parallel zueinander ausgerichtet, wodurch eine Gleitbahn für eine Bewegung parallel zur Gelenkbahn 16 entsteht. In die Führungsnuten 20 ist jeweils ein Gleitstück 21 frei beweglich eingesetzt, das eine Nachbildung der Zwischengelenkscheibe (Knorpelmasse bzw. Diskus) des Kiefergelenks 3 darstellt. Der Gelenkraum des Kiefergelenks 3 wird durch den Diskus 21 in zwei Teilräume aufgegliedert, wobei der Diskus 21 in Eingriff bringbar ist mit dem jeweiligen Gelenkkopf 10. Die Rotationsbewegung des Unterkiefers wird dann zwischen Diskus 21 und dem Gelenkkopf 10 realisiert. Die Translationsbewegung des Unterkiefers findet zwischen Diskus 21 und der Schädelgelenkbahn 16 statt. Der Diskus 21 folgt bei der Translationsbewegung passiv der Bewegung des Gelenkkopfes 10, ist also mit diesem entlang der Führungsnuten 20 verschiebbar. Da Diskus 21 und Gelenkkopf 10 unter Wirkung der Befestigungseinrichtungen 4 in einem kraftschlüssigen Eingriff stehen, können bei einer Überbelastung Diskus 21 und Gelenkkopf 10 außer Eingriff gelangen, so daß der Gelenkkopf 10 in die Schädelgelenkbahn 16 in Eingriff gelangt und dort eine Rotations- und Gleitbewegung ausüben kann.

Der Diskus 21 besteht hier aus zwei in Längsrichtung der Schädelgelenkbahn 16 mit Abstand zueinander angeordneten Stäben 22, die Anschlagflächen für einen Gelenkkopf 10 mit Abstand zur Schädelgelenkbahn 16 bilden. Mittels mindestens einem außenseitig sichtbaren und an der Führungsbahn 20 geführten Aufsatzstücks 23 werden die beiden Stäbe 22 abstandsfest gehalten und zudem die Lage des Diskus 21 auf der Gleitbahn der Schädelgelenkbahn 16 angezeigt.

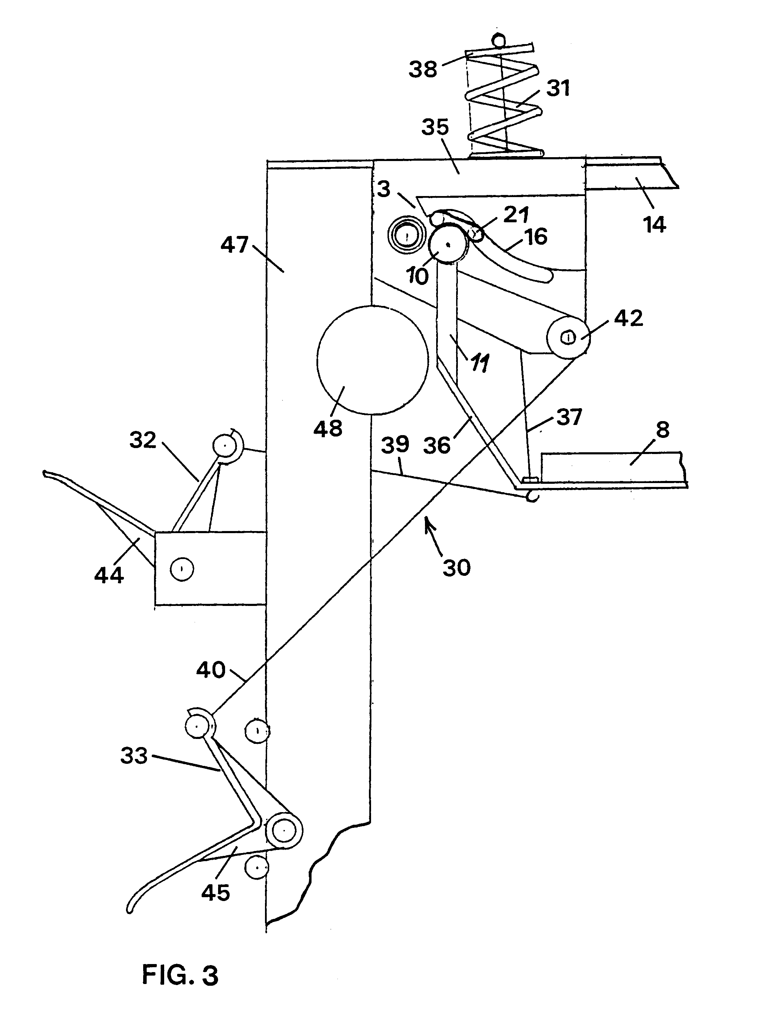

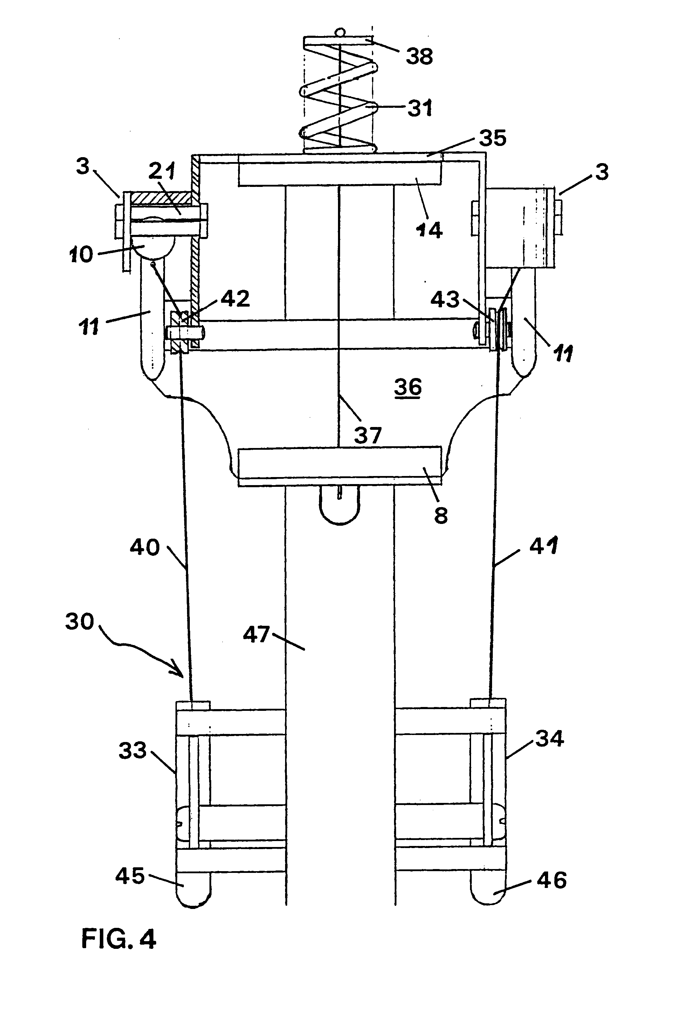

Die Figuren 3 und 4 zeigen ein zweites Ausführungsbeispiel des Kopfmodells, von dem im wesentlichen nur eine Betätigungseinrichtung 30 zur Durchführung der funktionellen Bewegungen des Unterkiefers zusammen mit den Primärsockeln 8 und 14 und den Kiefergelenken 3 dargestellt ist. Insbesondere der Unterkiefer- und der Schädelknochen sind weggelassen. Dieses Kopfmodell ist entsprechend dem vorstehend beschriebenen Kopfmodell ausgebildet, ausgenommen den Befestigungseinrichtungen 4, die durch die Betätigungseinrichtung 30 ersetzt werden. Die Betätigungseinrichtung 30 erlaubt eine steuerbare Übertragung verschiedener Kraftmomente auf einen über eine zentrale Feder 31 gegenüber dem Oberkiefer, d.h. Primärsockel 14, federvorgespannten Unterkiefer, um eine Öffnungs-, Vorschubbewegung und/oder seitliche Verschiebung des Unterkiefers vornehmen zu können. Die Betätigungseinrichtung 30 bewirkt damit eine elastische Verbindung des Unterkiefers mit dem Schädel, die den menschlichen Bandapparat und die Muskulatur des Unterkiefers simuliert.

Die Betätigungseinrichtung 30 umfaßt neben der zentralen Feder 31 verschiedene Zugmittel 32, 33, 34 für eine Kraftübertragung zur Ausführung einer Schwenk- und/oder Gleitbewegung der Gelenkköpfe 10 in den Kiefergelenken 3.

Wie in den Figuren 3 und 4 dargestellt, sind der Primärsockel 14 für die Oberkieferzahnreihe und auswechselbare Einsätze mit Schädelgelenkbahnen 16 in einem definierten Abstand zueinander mittels einer Oberkieferhalterung 35 im nicht gezeigten Schädel verankert. Auf einer im Unterkiefer befestigbaren Unterkieferhalterung 36 ist der Primärsockel 8 angeordnet. Die Unterkieferhalterung 36 trägt beidseitig die Gelenkhälse 11, die die Gelenkköpfe 10 aufweisen. Die Gelenkköpfe 10 sind in Wirkeingriff mit den Schädelgelenkbahnen 16 bringbar, gegebenenfalls unter Zwischensetzen des Diskus 21, indem die Unterkieferhalterung 36 gegenüber der Oberkieferhalterung 35 federvorgespannt ist. Die Federvorspannung erfolgt mittels einer zentralen Feder 31, die eine an der Unterkieferhalterung 36 befestigte Verbindungseinrichtung 37 gegenüber der Oberkieferhalterung 35 spannt und sich hierzu an dem anderen Ende 38 der Verbindungseinrichtung 37 und der Oberkieferhalterung 35 abstützt. Die Verbindungseinrichtung kann beispielsweise als Schnur, Draht oder Seil ausgebildet sein und verbindet die Oberkiefer- und Unterkieferhalterung 35, 36 unter Ausbildung einer vorzugsweise senkrecht zur Ebene des Primärsockels 14 wirkenden Kraftkomponente.

Die gegenüber der Oberkieferhalterung 35 federvorgespannte Unterkieferhalterung 35 erlaubt, die auf den Primärsockeln 8, 14 sitzenden Zahnbogenmodelle in der Schlußbißstellung zu halten. Mittels den Zugmitteln 32, 33 und 34 kann die Unterkieferhalterung 36 zusammen mit dem Zahnbogenmodell des Unterkiefers entsprechend den von den Kiefergelenken vorgegebenen Freiheitsgraden aus der Schlußbißstellung bewegt werden.

Zur Durchführung einer Schwenkbewegung der Unterkieferhalterung 36 in den verschiedenen Sitzen der Gelenkköpfe 10 entlang der Schädelgelenkbahnen 16 ist das Zugmittel 32 vorgesehen, das über eine Zugverbindung, vorzugsweise ein Zugseil 39, rückseitig an der Unterkieferhalterung 36 angreift. Die rückwärtige Schwenkbewegung wird dabei durch einen Anschlag 48 begrenzt. Hierdurch wird in Verbindung mit der Federvorspannung der Band- und Muskelapparat des Unterkiefers für die Öffnungsbewegung simuliert.

Für eine einzelne oder gemeinsame Verschiebung der Gelenkköpfe 10 entlang der Schädelgelenkbahnen 16 sind die unabhängig voneinander betätigbaren Zugmittel 33 und 34 vorgesehen. Die Zugmittel 33, 34 greifen jeweils über eine Zugverbindung, vorzugsweise Zugseile 40, 41, an den Gelenkhälsen 11 oder Gelenkköpfen 10 an, wobei zur Ausrichtung einer Kraftkomponente im wesentlichen parallel der Längserstreckung der Schädelgelenkbahnen 16 Umlenkrollen 42, 43 vorgesehen sind. Hierdurch wird in Verbindung mit der Federvorspannung der Band- und Muskelapparat des Unterkiefers für die seitliche Verschiebung (rechts oder links) oder die Vorschubbewegung simuliert.

Zur Betätigung der Zugmittel 32, 33, 34 können einzelne Drehhebel 44, 45, 46 vorgesehen sein, die an einem fest mit der Oberkieferhalterung 35 verbundenen Träger 47 befestigt sein können.

**Patentansprüche**

1. Kopfmodell zur Darstellung gnathologischer Zusammenhänge bestehend aus einem dem menschlichen Kopf nachgebildeten Schädel und Unterkiefer mit einem Ober- und Unterkieferzahnbogen, wobei der Unterkiefer über zwei Kiefergelenke mit dem Schädel verbunden und federvorgespannt in einer Bißstellung gehalten ist, dadurch gekennzeichnet, daß die Kiefergelenke (3) jeweils eine am Schädel (1) angeordnete Schädelgelenkbahn (16) in Form einer geschwungenen, konkaven Gleitbahn umfassen, auf der ein in Nuten (20) geführtes, mit einem Gelenkkopf (10) des Unterkiefers (2) in kraftschlüssigen Eingriff bringbares Gleitstück (21) frei beweglich verschiebbar ist und ein außenseitig sichtbares Aufsatzstück (23) trägt.

2. Kopfmodell nach Anspruch 1, dadurch gekennzeichnet, daß die Oberund Unterkieferzahnbögen als auswechselbare Zahnbogenmodelle (7, 13) eines Patienten ausgebildet sind.

3. Kopfmodell nach Anspruch 2, dadurch gekennzeichnet, daß die Zahnbogenmodelle (7, 13) jeweils über ein Quicksplit-Magnetofix-System (8, 9; 14,15) im Unterkiefer (2) oder Schädel (1) verankerbar sind.

4. Kopfmodell nach einem der Ansprüche 1 bis 3, dadurch gekennzeichnet, daß das Gleitstück (21) von zwei mit Abstand zueinander angeordneten Stäben (22) gebildet wird und der Abstand einen kraftschlüssigen Wirkeingriff mit den Gelenkköpfen (10) erlaubt.

5. Kopfmodell nach einem der Ansprüche 1 bis 4, dadurch gekennzeichnet, daß die Nuten (20) in entlang der Schädelgelenkbahn (16) angeordneten Seitenstücken (19) vorgesehen sind und von einer entsprechend der Gleitbahn der Schädelgelenkbahn (16) geschwungenen und begrenzten Einschnittlinie gebildet werden.

6. Kopfmodell nach einem der Ansprüche 1 bis 5, dadurch gekennzeichnet, daß der Unterkiefer mittels beidseitig des Unterkiefers (2) angeordneten elastischen Befestigungseinrichtungen (4) vorspannbar ist.

7. Kopfmodell nach einem der Ansprüche 1 bis 5, dadurch gekennzeichnet, daß der Unterkiefer (2) mittels einer zentralen Federeinrichtung (31, 37) vorspannbar ist.

8. Kopfmodell nach einem der Ansprüche 1 bis 7, dadurch gekennzeichnet, daß der federvorgespannte Unterkiefer (2) mittels Zugmitteln (32, 33, 34), geführt durch die Kiefergelenke (3), aus einer Bißstellung bewegbar ist.

9. Kopfmodell nach Anspruch 6 und 8, dadurch gekennzeichnet, daß die Zugmittel (32, 33, 34) als unabhängig voneinander betätigbare Einrichtungen mit einer Kraftkomponente zum Schwenken und/oder Kraftkomponenten zum Verschieben der Gelenkköpfe (10) parallel der Längserstreckung der Schädelgelenkbahnen (16) angreifen.

FIG. 1

FIG. 2

**FIG. 3**

FIG. 4

**Europäisches Patentamt**

**EUROPÄISCHER RECHERCHENBERICHT**

Nummer der Anmeldung

**EP 91 11 2158**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 816 007   (KALTENBACH & VOIGT GMBH) * Anspruch 1; Abbildungen * * – – – | 1 | A 61 C 11/00 |
| A | US-A-3 570 127   (GETZ) * Spalte 2, Zeile 6 - Zeile 23; Abbildungen * * – – – – – | 1 | |

**RECHERCHIERTE SACHGEBIETE (Int. Cl.5)**

A 61 C
G 09 B

Der vorliegende Recherchenbericht wurde für alle Patentansprüche erstellt

| Recherchenort | Abschlußdatum der Recherche | Prüfer |
|---|---|---|
| Den Haag | 04 November 91 | CLARKSON P.M. |